Europäisches Patentamt

European Patent Office

Office européen des brevets

(11) Veröffentlichungsnummer: **0 367 065**
**A1**

## (12) EUROPÄISCHE PATENTANMELDUNG

(21) Anmeldenummer: **89119660.2**

(22) Anmeldetag: **24.10.89**

(51) Int. Cl.⁵: **F01N 3/28**

(30) Priorität: **04.11.88 DE 3837503**

(43) Veröffentlichungstag der Anmeldung:
**09.05.90 Patentblatt 90/19**

(84) Benannte Vertragsstaaten:
**DE ES FR GB IT SE**

(71) Anmelder: **HEINRICH GILLET GMBH & CO. KG**
**An der Bundesstrasse 38**
**D-6732 Edenkoben(DE)**

(72) Erfinder: **Reuther, Georg, Dipl.-Ing.**
**Hauptstrasse 132**
**D-6741 Hochstadt/Pfalz(DE)**

(74) Vertreter: **Patentanwälte Dipl.-Ing. F.W. Möll**
**Dipl.-Ing. H.Ch. Bitterich**
**Langstrasse 5 Postfach 2080**
**D-6740 Landau/Pfalz(DE)**

(54) **Abgas-Katalysator für Kraftfahrzeuge.**

(57) Die Erfindung betrifft einen Abgas-Katalysator für kraftstoffbetriebene Motoren. Der katalytisch beschichtete Monolith (1) ist in einem Stahlblechgehäuse (2) gelagert. Der Zwischenraum zwischen Monolith (1) und Gehäuse (2) ist stirnseitig durch Dichtelemente in Form von Wellrohren (9) begrenzt. Der Zwischenraum (5) ist mit einer pastösen Füllmasse verfüllt, die durch eine verschließbare Öffnung (4) eingebracht wird und nach ihrer Aktivierung den Monolithen (1) im Gehäuse (2) fixiert und gegebenenfalls thermisch isoliert.

Fig.3

EP 0 367 065 A1

## Abgas-Katalysator für Kraftfahrzeuge

Die Erfindung betrifft die Lagerung eines katalytisch beschichteten Monolithen im Gehäuse eines Abgas-Katalysators für kraftstoffbetriebene Motoren gemäß dem Oberbegriff des Anspruchs 1 sowie ein Verfahren zur Herstellung eines solchen Abgas-Katalysators.

Abgas-Katalysatoren für kraftstoffbetriebene Motoren bestehen üblicherweise aus einem katalytisch beschichteten Monolithen, vorzugsweise einem Waben-Keramikkörper oder Metallkörper, der mit Hilfe von geeigneten Elementen sicher und gasdicht in einem Stahlblechgehäuse gelagert ist. Auf diese Dicht- und Lagerelemente hat sich von Anfang an die Aufmerksamkeit der Erfinder und Konstrukteure gerichtet. Diese Elemente müssen extremen Anforderungen genügen. Sie müssen die thermischen Ausdehnungsunterschiede zwischen Monolith und Gehäuse elastisch ausgleichen, die hohen Abgas-und Katalysetemperaturen über 800 Grad C aushalten und dabei den Druckpulsationen des Abgases standhalten.

Als Dichtelemente und Lagerungselemente bewährt haben sich sogenannte Gestricke aus Metall- und/oder Keramikfäden sowie Quellmatten. An der Innenseite des Blechgehäuses angeschweißte Ringflansche, die ursprünglich zum Schutz der Lagerungselemente eingesetzt wurden, konnten sich nicht durchsetzen.

Es ist auch schon mehrfach vorgeschlagen worden, die Gehäuse doppelwandig auszubilden. Die DE-B-22 20 921 offenbart eine Konstruktion, bei der die Gehäuse-Innenschale sowohl gegenüber der Gehäuse-Außenschale als auch gegenüber dem Monolithen mit Hilfe von Drahtgestricken und/oder Quellmatten gehalten und abgedichtet ist.

Die DE-B-23 10 207 offenbart eine Konstruktion mit einer folienartigen Innenwand, wobei der Zwischenraum zwischen Innenwand und Außenwand mit Druckgas beaufschlagt wird, um den Monolithen zu halten.

Die DE-A-37 00 070 offenbart eine Konstruktion, bei der Innenschalen im Bereich der Übergangskonen des Gehäuses vorgesehen sind, wobei der Zwischenraum zwischen Innenschale und Gehäuse mit Isoliermaterial gefüllt wird. Die Lagerung des Monolithen im Gehäuse erfolgt in konventioneller Weise mittels sogenannter Quellmatten.

Bei der Montage werden die Drahtgestricke und Quellmatten zunächst auf den Monolithen aufgewickelt und mit Hilfsvorrichtungen - Klebestreifen, Drähte und dergleichen -hilfsweise fixiert. Dies gilt in gleicher Weise für gegebenenfalls vorgesehene zusätzliche Einbauteile. Dieses Paket wird dann in das üblicherweise aus zwei Halbschalen bestehende Blechgehäuse gelegt, dieses wird mit Hilfe einer geeigneten Vorrichtung geschlossen, wobei darauf geachtet werden muß, daß die Dicht- und Lagerelemente und sonstigen Einbauteile nicht verklemmt werden, und abschließend gasdicht verschweißt. Eine Korrektur der Gehäuseposition des Monolithen, der Lagerungselemente und/oder der sonstigen Einbauteile ist nicht möglich. Dies gilt auch bei Verwendung doppelwandiger Gehäuse.

Der vorliegenden Erfindung liegt die Aufgabe zugrunde, einen Abgas-Katalysator der eingangs genannten Art sowie ein Verfahren zu seiner Herstellung anzugeben, bei dem der Montageaufwand erheblich verringert und eine Kontrolle und Korrektur der Monolithenposition möglich ist.

Diese Aufgabe wird gelöst durch einen Abgas-Katalysator der gattungsgemäßen Art mit den kennzeichnenden Merkmalen des Anspruchs 1, vorzugsweise in Verbindung mit einem Herstellungsverfahren mit den kennzeichnenden Merkmalen des Anspruchs 9.

Damit ergeben sich die Vorteile, daß die bei der Herstellung des erfindungsgemäßen Abgas-Katalysators benötigten Dichtelemente nur noch relativ kleine Abmessungen und geringe Festigkeitswerte haben müssen. Da die eigentliche gasdichte und temperaturfeste Abdichtung erst nach dem Schließen des Gehäuses eingebracht wird, genügen geringe Kräfte, um das aus zwei Halbschalen bestehende Gehäuse zu schließen. Anstelle von hydraulischen Pressen können bei der Montage jetzt einfache mechanische Kniehebelvorrichtungen eingesetzt werden. Außerdem kann die korrekte Position des Monolithen kontrolliert und gegebenenfalls korrigiert werden. Die Dichtelemente haben zunächst die Aufgabe, die Ausbreitung der eingefüllten Füllmasse bis zu deren Erhärten sicher zu begrenzen. Im späteren Betrieb schützen sie die Enden der Füllmasse; sie müssen deshalb auch hochtemperaturfest und druckpulsationsfest sein.

Vorzugsweise weist das Gehäuse eine verschließbare Öffnung zum Einbringen der Füllmasse in den Zwischenraum auf. Das Verschließen der Öffnung wird durch geeignete Verfahren sichergestellt.

Zusätzlich weist das Gehäuse auch wenigstens eine Öffnung zum Entlüften des Zwischenraums während des Befüllens auf. Dies erlaubt es, zum Einfüllen bzw. Einpressen der Füllmasse einen einfachen Füllstutzen ohne eigene Entlüftungsöffnung zu verwenden.

Für die Ausgestaltung der Dichtelemente, die den Zwischenraum zwischen Monolith und Gehäuse in axialer Richtung begrenzen, sind mehrere alternative Ausführungsformen möglich.

Gemäß einer ersten Alternative sind die Dichtelemente als Dichtringe ausgebildet, die aus einem füllmassendicht ummantelten Drahtgestrick bestehen. Diese Dichtringe aus temperaturbeständigem Material dienen unter anderem dazu, während des Betriebs die Einwirkungen der Druckpulsationen auf die Füllmasse zu mildern.

Gemäß einer zweiten Alternative sind die Dichtelemente als Blechkonen ausgebildet, die bis in die Gehäusestutzen geführt sind. Der Übergang zwischen Blechkonen und Monolith wird bei der Montage zunächst durch einen Klebedichtstreifen abgedichtet. Bei dieser konstruktiven Ausführung entsteht eine Art Doppelmantel im Gehäuse, der in einem Arbeitsgang mit Füllmasse verfüllt bzw. verpreßt wird, wodurch auch eine in vielen Fällen erwünschte Wärmeisolierung des Gehäuses erreicht wird.

Gemäß einer dritten Alternative sind die Dichtelemente als Wellrohre ausgebildet, die gegen die Gehäusestutzen oder die Gehäusekonen abgedichtet sind. Auch bei dieser Abwandlung ist eine erweiterte Wärmeisolierung des Gehäuses gegeben, verbunden jedoch mit einer höheren Elastizität der Monolithenlagerung in axialer Richtung.

Die pastöse Füllmasse muß entsprechend eingestellt sein, um alle Bereiche des Zwischenraums zwischen Gehäuse, Monolith und Dichtelementen ausfüllen zu können. Deshalb kann es sich empfehlen, die Füllmasse nach dem Einfüllen bzw. Einpressen und dem Verschließen der Gehäuseöffnungen zu aktivieren.

Dieses Aktivieren bedeutet das Verfestigen wie z. B. Quellen, der Füllmasse, ausgelöst durch physikalische und/oder chemische Prozesse oder vergleichbare Vorgänge.

Anhand der Zeichnung soll die Erfindung in Form von Ausführungsbeispielen näher erläutert werden. Es zeigen jeweils im Längsschnitt und in schematischer Darstellung

Fig. 1 eine erste Ausführungsform eines Abgas-Katalysators,

Fig. 2 eine zweite Ausführungsform eines Abgas-Katalysators,

Fig. 3 eine dritte Ausführungsform eines Abgas-Katalysators.

In allen Figuren erkennt man als katalytisch wirksames Element einen Monolithen 1, meist in Form eines Keramikkörpers oder Metallkörpers mit wabenförmigen Kanälen, die mit Edelmetall beschichtet sind. Der Monolith 1 befindet sich in einem Stahlblechgehäuse 2 mit beliebigem Querschnitt. Zur Verbindung mit den in der Zeichnung nicht dargestellten abgasführenden Rohren sind Anschlußstutzen 2.2 vorgesehen. Benachbart zu den Anschlußstutzen 2.2 besitzt das Gehäuse 2 Anschlußkonen 2.1.

Zwischen Monolith 1 und Gehäuse 2 ist ein Zwischenraum 5 ausgebildet. Dieser wird mit einer pastösen Füllmasse verfüllt bzw. verpreßt, wobei Dichtringe 3, beispielsweise aus Gestricken oder Matten von Metall- und/oder Keramikfäden, gegebenenfalls füllmassendicht ummantelt, die Ausbreitung der Dichtmasse axial begrenzen. Zum Einfüllen der Füllmasse ist im Gehäuse 2 eine Einfüllöffnung 4 vorgesehen, auf die ein Einfüllstutzen 3 aufgesetzt werden kann. Um den Zwischenraum 5 beim Einfüllen der Füllmasse entlüften zu können, ist gegebenenfalls wenigstens eine Entlüftungsöffnung 6 vorgesehen.

Die primäre Aufgabe der Dichtringe 3 besteht darin, den Monolithen 1 vor dem Einbringen der Füllmasse korrekt im Gehäuse 2 zu halten und die axiale Ausbreitung der Füllmasse zu begrenzen. Durch die Öffnungen 4, 6 sowie durch die Anschlußkonen 2.2 kann die korrekte Lage des Monolithen 1 im Gehäuse 2 jederzeit überprüft und nötigenfalls korrigiert werden. Die endgültige Fixierung und Lagerung erfolgt durch Einbringen und Aktivieren der Füllmasse.

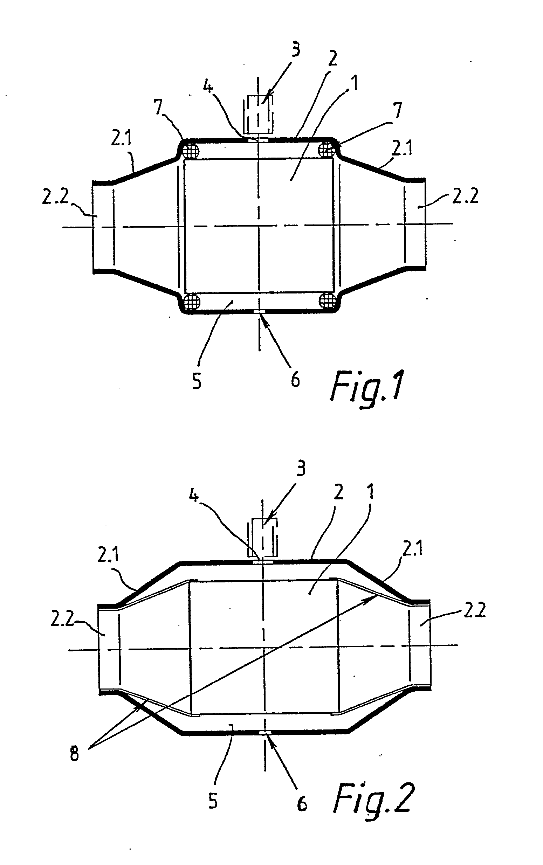

Eine zweite Ausführungsform zeigt die Fig. 2. Hier wird der Monolith 1 mit Hilfe von Innenkonen 8, die bis in die Anschlußstutzen 2.2 hineinreichen, im Gehäuse 2 positioniert. Zusätzlich ist das Gehäuse 2 nach dem Einbringen der Füllmasse, die aufgrund ihrer Zusammensetzung wärmeisolierend wirkt, auch im Bereich der Konen 2.1 gegen Wärmeverluste geschützt, ohne daß ein besonderer Arbeitsvorgang erforderlich wäre.

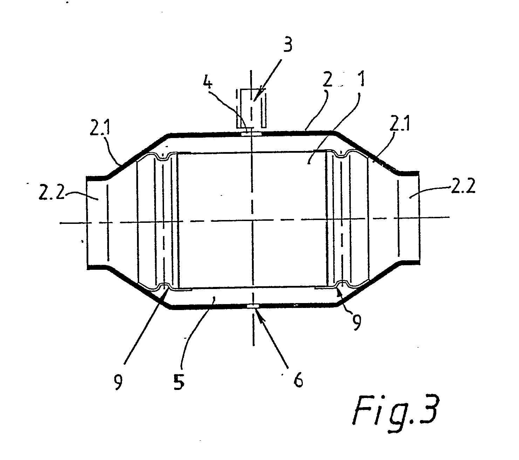

Eine dritte Ausführungsform zeigt Fig. 3. Hier erfolgt die Lagerung des Monolithen 1 in Abwandlung zur Ausführungsform gemäß Fig. 2 durch Wellrohre 9, die innen an den Gehäusekonen 2.1 befestigt sind. Falls eine weitergehende Wärmeisolierung des Gehäuses 2 angestrebt wird, können die Wellrohre 9 auch bis in die Gehäusestutzen 2.2 verlängert werden.

## Ansprüche

1. Abgas-Katalysator für kraftstoffbetriebene Motoren, bestehend aus einem katalytisch beschichteten Monolithen (1), einem Blechgehäuse (2) und Elementen (7, 8, 9, 10) zur sicheren und gasdichten Lagerung des Monolithen (1) im Gehäuse (2), dadurch gekennzeichnet, daß der zwischen Monolith (1) und Gehäuse (2) gebildete Zwischenraum (5) durch die Elemente (7, 8, 9, 10) stirnseitig abgedichtet und mit einer pastösen Füllmasse verfüllt bzw. verpreßt ist.

2. Abgas-Katalysator nach Anspruch 1, dadurch gekennzeichnet, daß die eingebrachte Füllmasse zur Lagerung des Monolithen im Stahlgehäuse dient.

3. Abgas-Katalysator nach Anspruch 1, dadurch gekennzeichnet, daß die eingebrachte Füllmasse zusätzlich zur thermischen Isolation dient.

4. Abgas-Katalysator nach Anspruch 1, 2 oder 3, dadurch gekennzeichnet, daß das Gehäuse (2) eine verschließbare Öffnung (4) zum Einbringen der Dichtmasse in den Zwischenraum (5) aufweist.

5. Abgas-Katalysator nach wenigstens einem der Ansprüche 1 bis 4, dadurch gekennzeichnet, daß das Gehäuse (2) wenigstens eine Öffnung (6) zum Entlüften des Zwischenraums (5) aufweist.

6. Abgas-Katalysator nach wenigstens einem der Ansprüche 1 bis 5, dadurch gekennzeichnet, daß die Dichtelemente als Dichtinge (7) ausgebildet sind, die im Neuzustand füllmassendicht ummantelt sind.

7. Abgas-Katalysator nach wenigstens einem der Ansprüche 1 bis 5, dadurch gekennzeichnet, daß die Dichtelemente als Blechkonen (8) ausgebildet sind, die bis in die Gehäusestutzen (2.2) geführt und dort abgedichtet sind.

8. Abgas-Katalysator nach wenigstens einem der Ansprüche 1 bis 5, dadurch gekennzeichnet, daß die Dichtelemente als Wellrohre (9) ausgebildet sind, die gegen die Gehäusestutzen (2.2) oder die Gehäusekonen (2.1) gedichtet sind.

9. Verfahren zur Herstellung einer sicheren und gasdichten Lagerung eines katalytisch beschichteten Monolithen (1) in einem Blechgehäuse (2), wobei zwischen Monolith (1) und Gehäuse (2) Dichtelemente (7, 8, 9, 10) eingebracht sind, zur Herstellung eines Abgas-Katalysators nach den Ansprüchen 1 bis 8, dadurch gekennzeichnet, daß nach dem Einsetzen des Monolithen (1) in das Gehäuse (2) und dem Schließen desselben der Zwischenraum (5) zwischen Gehäuse (2), Monolith (1) und Dichtelementen (7, 8, 9, 10) mit einer Füllmasse verfüllt bzw. verpreßt wird.

10. Verfahren nach Anspruch 9, dadurch gekennzeichnet, daß die Füllmasse nach dem Einfüllen bzw. Einpressen und dem Verschließen der Gehäuseöffnungen (4, 6) aktiviert wird.

*Fig.1*

*Fig.2*

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | FR-A-2467975 (U.O.P.)<br>* Seite 3, Zeilen 34 - 36 *<br>* Seite 4, Zeilen 13 - 17; Figur 2 *<br>--- | 1, 2, 10 | F01N3/28 |
| A | DE-A-2300704 (EBERSPACHER)<br>* Ansprüche 1, 2; Figur 1 *<br>--- | 1, 6, 8 | |
| A | US-A-3938232 (NODA)<br>* Zusammenfassung *<br>* Spalte 2, Zeilen 33 - 46; Figur 1 *<br>--- | 1, 2, 4,<br>6, 9 | |
| A | PATENT ABSTRACTS OF JAPAN<br>vol. 8, no. 189 (M-321)(1626) 30 August 1984,<br>& JP-A-59 79025 (MAZDA) 08 Mai 1984,<br>* das ganze Dokument *<br>--- | 1-3, 7 | |
| A | FR-A-2211041 (EBERSPACHER)<br>* Seite 4, Zeilen 28 - 35; Figur 1 *<br>--- | 1, 3, 6 | |
| A | DE-A-2627596 (ZEUNA-STARKER)<br>* Figur 1 *<br>--- | 8 | RECHERCHIERTE SACHGEBIETE (Int. Cl.5 ) |
| A | DE-A-2341265 (VOLKSWAGENWERK)<br>--- | | F01N |
| A | EP-A-210103 (CYCLES PEUGEOT)<br>----- | | |

Der vorliegende Recherchenbericht wurde für alle Patentansprüche erstellt

| Recherchenort | Abschlußdatum der Recherche | Prüfer |
|---|---|---|
| DEN HAAG | 05 DECEMBER 1989 | ERNST J.L. |